# DEMANDE DE BREVET EUROPEEN

(11) **EP 4 775 390 A1**
(43) Date de publication de la demande: **15.07.2026**
(21) Numéro de dépôt: 26150594.5
(22) Date de dépôt: 07.01.2026
(51) Int. Cl.: B32B 3/12, B32B 7/12, B32B 15/04, B32B 15/06, B32B 15/18, B32B 15/20

(54) **MODULE POUR LA RÉALISATION D'UN CIRCUIT MODULAIRE POUR VÉHICULE**

(30) Priorité: 09.01.2025 FR 2500209
(71) Demandeur: Dumont, Eric, 62530 Servins (FR)
(72) Inventeur: Dumont, Eric, 62530 Servins (FR)
(74) Mandataire: RVDB

(57) **Abrégé**

L'invention concerne un module (10) pour la réalisation d'un circuit modulaire pour véhicule, le module (10) comportant au moins une couverture (12) supérieure qui s'étend longitudinalement suivant la direction d'avancement prévue dudit véhicule et qui peut adopter une forme courbe, et une structure (14) de support inférieure qui supporte ladite couverture (12), caractérisé en ce que la structure (14) de support comporte une âme alvéolaire (26) qui est agencée au-dessous de la couverture (12) et qui forme une grille délimitant une pluralité d'alvéoles (38) de forme colonnaire, les alvéoles s'étendant globalement perpendiculairement à la couverture (12) pour reprendre les efforts mécaniques appliqués sur la couverture (12).

## Description

### Domaine de l'invention

La présente demande de brevet se rapporte au domaine des circuits modulaires pour véhicule, et plus particulièrement à un module pour la réalisation d'un tel circuit modulaire.

La présente invention trouvera de façon non-exclusive des applications avantageuses dans le domaine de la course de véhicules à deux roues, du type moto à moteur thermique ou électrique, ou vélo, notamment en permettant la réalisation d'un circuit au moyen d'un ensemble de modules.

### Etat de la technique

Les circuits traditionnels sont des infrastructures qui sont permanentes et figées, non-évolutives, généralement adaptées à une seule discipline, voire seulement à un seul niveau de pratique d'une discipline.

Ce type de circuit permanent est souvent constitué de terre, et sa réalisation demande le déplacement de centaines, voire de milliers, de mètres cubes de terre au moyen d'engins de chantier et de camions.

Ainsi, la réalisation de ce type de circuit demande une quantité importante d'énergie et de nombreuses heures de travail.

On connaît également des circuits traditionnels éphémères qui sont construits par exemple à l'occasion d'une compétition sportive, comme un « supercross », et qui demandent également le déplacement d'une grande quantité de matière.

Le circuit modulaire offre une solution aux problèmes posés par les circuits traditionnels, en limitant la quantité de matière à déplacer, et donc la quantité d'énergie consommée, tout en offrant une plus grande souplesse et polyvalence dans la réalisation du circuit.

En effet, un circuit modulaire est composé d'une pluralité de modules préfabriqués qui sont agencés successivement et qui forment chacun un obstacle à franchir par les véhicules.

Chaque module qui constitue le circuit devient un élément indépendant et transportable.

En disposant d'une variété de modules, il est possible de constituer une piste de circuit sur-mesure qui est adaptée à un lieu, à une discipline et à un niveau de pratique.

On comprendra que le processus de construction et déconstruction d'un tel circuit modulaire est sans commune mesure avec la mise en œuvre d'un circuit traditionnel.

La réalisation d'un circuit modulaire se limite à sélectionner les modules adaptés au besoin, les charger sur un semi-remorque, un camion ou une remorque à l'aide d'un chariot élévateur ou d'un transpalette, puis à agencer les modules pour dessiner le circuit.

Le circuit modulaire a pour vocation la modernisation et la démocratisation des disciplines de véhicules à deux roues, notamment les motos électriques légères, en proposant une infrastructure dédiée qui permet l'initiation et la découverte de ces disciplines.

La demanderesse a développé par le passé un module pour la réalisation d'un tel circuit modulaire pour véhicule.

Ce module est du type mécano-soudé et comporte essentiellement une couverture supérieure et une structure de support inférieure qui supporte la couverture.

La couverture s'étend longitudinalement suivant la direction d'avancement prévue des véhicules, la couverture pouvant adopter une forme courbe et/ou rectiligne.

Aussi, la couverture est revêtue d'une peau supérieure en élastomère qui est prévue pour favoriser l'adhérence des véhicules et pour augmenter la durée de vie du module.

On notera que la couverture est réalisée au moyen d'une ou plusieurs tôles métalliques qui sont découpées et pliées suivant la courbe souhaitée.

La structure du module comprend un châssis tubulaire en acier qui comprend plusieurs tubes métalliques soudés entre eux.

De plus, deux tôles de flanc et des tôles de support sont soudées sur le châssis tubulaire.

Enfin, la couverture est soudée sur la structure du module.

Ce type de module à châssis tubulaire permet la réalisation de circuits modulaires et permet par conséquent de pallier les problèmes posés par la réalisation des circuits traditionnels décrits précédemment.

Toutefois, la demanderesse a constaté, dans certaines conditions et après le passage d'un grand nombre de véhicules, un léger affaissement de la crête du module.

En effet, dans le cadre d'une compétition du type motocross, les modules peuvent recevoir des impacts violents lorsque certains pilotes manquent leur saut et réceptionnent trop en amont sur la crête du module plutôt que sur la partie de réception en pente du module.

En cas de réception sur la crête du module, le support moteur de la moto peut impacter directement la crête du module et l'endommager.

Si la conception d'une structure de module mécano-soudée en acier tubulaire semble être le meilleur compromis entre la résistance à la compression, la masse, le coût et la complexité, il semble difficile d'augmenter la résistance à l'impact de la couverture en tôle, par exemple en augmentant son épaisseur, sans avoir des répercussions importantes en termes de masse, de coût et de complexité d'assemblage et de soudage de la couverture sur la structure du module.

### Exposé de l'invention

Le but de la présente invention est de résoudre les problèmes mentionnés ci-dessus, en éliminant les inconvénients de l'art antérieur cité, en fournissant un module pour la réalisation d'un circuit modulaire pour véhicule, qui présente une résistance aux impacts accrue.

Un autre objectif de l'invention est de limiter la masse, le coût et la complexité d'assemblage d'un tel module.

On atteint ces objectifs, ainsi que d'autres qui apparaîtront à la lecture de la description qui suit, avec un module pour la réalisation d'un circuit modulaire pour véhicule, le module comportant au moins :
- une couverture supérieure qui s'étend longitudinalement suivant la direction d'avancement prévue dudit véhicule et qui peut adopter une forme courbe, et
- une structure de support inférieure qui supporte ladite couverture,

Selon l'invention, la structure de support comporte une âme alvéolaire qui est agencée au-dessous de la couverture et qui forme une grille délimitant une pluralité d'alvéoles de forme colonnaire, les alvéoles s'étendant globalement perpendiculairement à la couverture pour reprendre les efforts mécaniques appliqués sur la couverture.

Une telle structure à âme alvéolaire offre au module selon l'invention une grande capacité à résister aux forces qui le compriment ou le déforment, en particulier suivant une direction perpendiculaire à sa grande surface, c'est à dire suivant une direction perpendiculaire à la couverture du module.

Ces caractéristiques permettent au module selon l'invention de résister efficacement aux impacts des véhicules qui réceptionnent sur la couverture du module, notamment sur la crête du module. Suivant d'autres caractéristiques optionnelles de l'invention, prises seules ou en combinaison :
- l'âme alvéolaire comporte au moins :
   - un premier ensemble de membrures longitudinales qui présentent chacune une pluralité de premières encoches, et
   - un second ensemble de membrures transversales qui présentent chacune une pluralité de secondes encoches qui sont adaptées pour coopérer avec les encoches des membrures longitudinales pour permettre un chevauchement et un emboîtement des membrures longitudinales sur les membrures transversales pour former l'âme alvéolaire, lesdites membrures s'étendant globalement perpendiculairement à la couverture, depuis un chant supérieur qui est en appui sur une face inférieure de la couverture. Un tel agencement par assemblage de membrures favorise la fabrication de l'âme alvéolaire. Aussi, ce type d'agencement permet de réaliser un nid d'abeille de forme courbe qui est apte à suivre la courbure de la couverture du module ;
      - chaque membrure forme une bande qui est découpée dans une tôle métallique ;
      - les membrures longitudinales et les membrures transversales de l'âme alvéolaire sont reliées entre elles par soudage ;
      - la couverture est réalisée au moyen d'une tôle métallique qui est pliée et qui est reliée par soudage sur l'âme alvéolaire ;
      - la couverture est revêtue d'une peau supérieure en élastomère qui est fixée sur la couverture et qui est adaptée pour favoriser l'adhérence du véhicule. La peau en élastomère permet également d'augmenter la durée de vie de la couverture et du module ;
      - la structure de support comporte au moins une traverse qui s'étend transversalement ;
      - la structure de support comporte au moins un longeron qui s'étend longitudinalement et qui relie lesdites traverses entre elles ;
      - il comporte au moins une paire de fourreaux transversaux qui sont solidaires de la structure de support et qui sont agencés pour permettre le passage d'une fourche d'un engin de levage.

### Brève description des dessins

D'autres caractéristiques, buts et avantages de l'invention apparaîtront à la lecture de la description détaillée qui suit pour la compréhension de laquelle on se reportera aux dessins annexés dans lesquels :
[Fig. 1] est une vue en perspective de dessus qui illustre un exemple de réalisation d'un module selon l'invention ;
[Fig. 2] est une vue éclatée en perspective qui illustre le module de la figure 1 ;
[Fig. 3] est une vue en perspective de dessus qui illustre l'âme alvéolaire du module de la figure 1, avec un médaillon illustrant en détail et en vue éclatée l'assemblage d'une membrure longitudinales sur une membrure transversale ;
[Fig. 4] est une vue en perspective de dessus qui illustre le châssis de la structure du module ;
[Fig. 5] est une vue en perspective de dessous qui illustre le module de la figure 1.

Dans la description et les revendications, on adoptera à titre non limitatif la terminologie longitudinal, vertical et transversal en référence au trièdre L, V, T indiqué aux figures, en considérant que la direction d'avancement du véhicule qui emprunte le module est longitudinale.

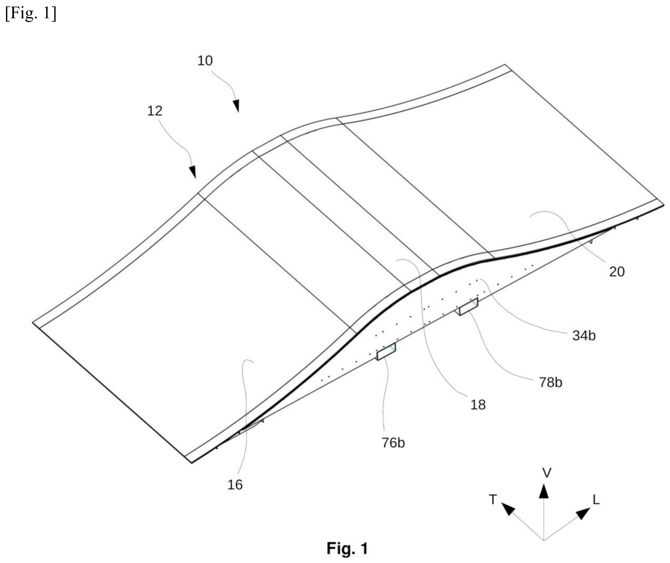

Aussi, on utilisera à titre non limitatif les expressions « supérieur », « inférieur » et « bas », « haut » en référence à la partie supérieure et à la partie inférieure respectivement de la figure 1.

De plus, on utilisera à titre non limitatif les expressions « amont » et « aval », en référence au sens d'avancement du véhicule sur le module.

Sur l'ensemble de ces figures, les éléments identiques ou similaires sont repérés par des signes de référence identiques ou similaires.

### Description détaillée de modes de réalisation de l'invention

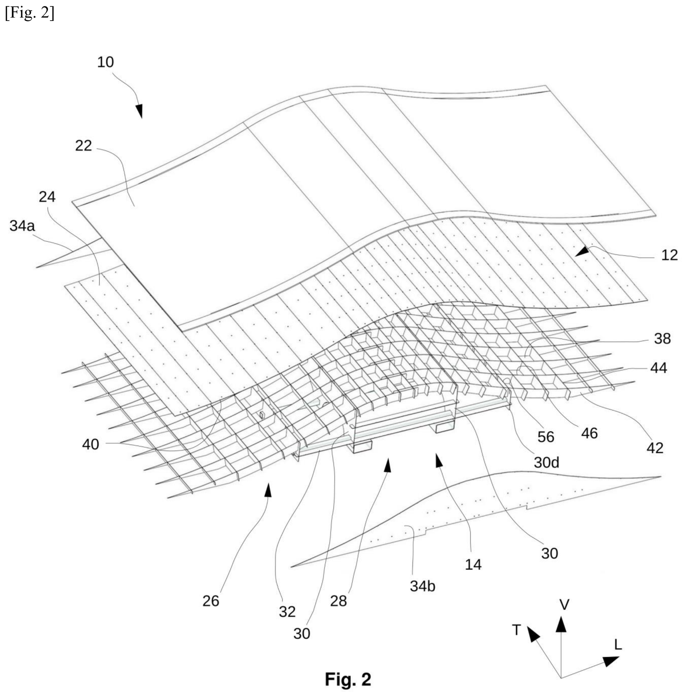

On a représenté aux figures 1 et 2 un module 10 pour la réalisation d'un circuit modulaire pour véhicule.

On entend par « module » un obstacle qui est destiné à être franchi par un véhicule comme une motocross à moteur électrique, une motocross à moteur thermique ou un vélo, par exemple.

De même, on entend par « circuit modulaire » un circuit qui est composé d'une pluralité de modules préfabriqués qui sont agencés successivement, généralement en boucle fermée.

Comme on peut le voir à la figure 2, le module 10 selon l'invention comporte essentiellement une couverture 12 supérieure et une structure 14 de support inférieure qui supporte la couverture 12. La couverture 12 forme la bande sur laquelle le véhicule se déplace, la couverture 12 s'étendant longitudinalement suivant la direction d'avancement du véhicule.

La couverture 12 présente une forme ondulée en bosse, qui comprend successivement une rampe amont 16 ascendante, une crête 18 et une rampe aval 20 descendante, en référence au sens d'avancement du véhicule d'amont en aval sur le module 10.

Toutefois, à titre non limitatif, la couverture 12 peut présenter différents types de formes ondulées, comme une forme en double bosses, une forme courbe du type tremplin avec uniquement une rampe ascendante, une forme rectiligne ou encore une forme rectiligne et courbe.

Aussi, la couverture 12 est réalisée au moyen d'une tôle métallique qui est découpée et pliée à la forme désirée.

Selon le présent exemple de réalisation de l'invention, la couverture 12 est réalisée en acier. Toutefois, à titre non limitatif, la couverture 12 peut être réalisée en aluminium ou en acier inoxydable.

Selon un exemple de réalisation, la tôle métallique présente une épaisseur de trois millimètres, épaisseur qui offre un compromis intéressant entre résistance mécanique, masse et coût.

Pour favoriser l'adhérence du véhicule sur le module 10, la couverture 12 est revêtue d'une peau 22 supérieure qui est réalisée en élastomère et qui est fixée sur une face supérieure 24 de la couverture 12 par collage.

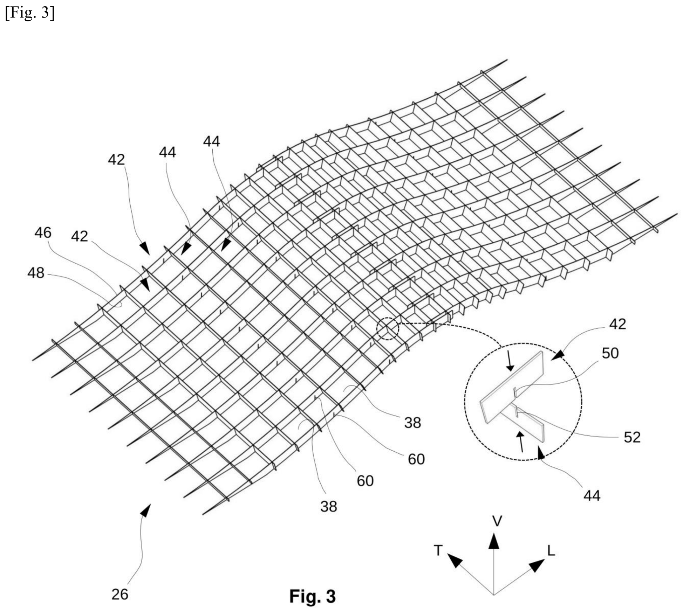

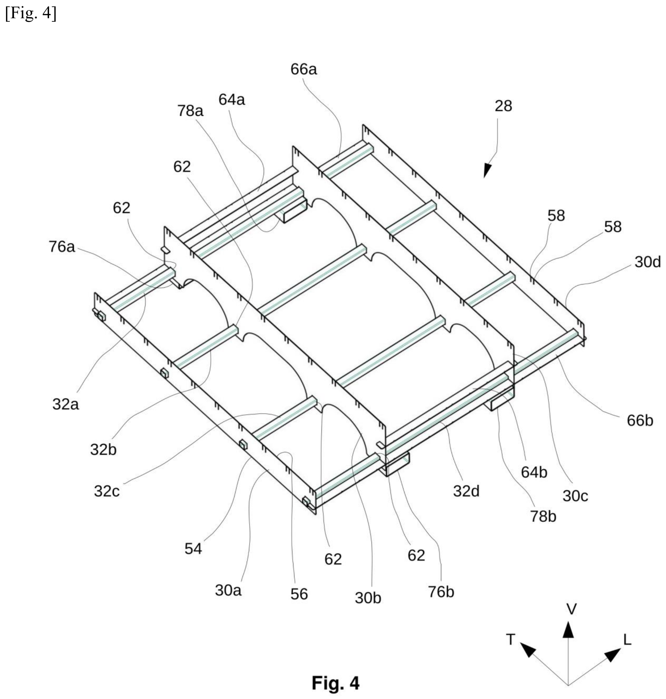

La structure 14 de support comporte une âme alvéolaire 26 illustrée en détail à la figure 3, un châssis 28 illustré à la figure 4 qui soutient l'âme alvéolaire 26.

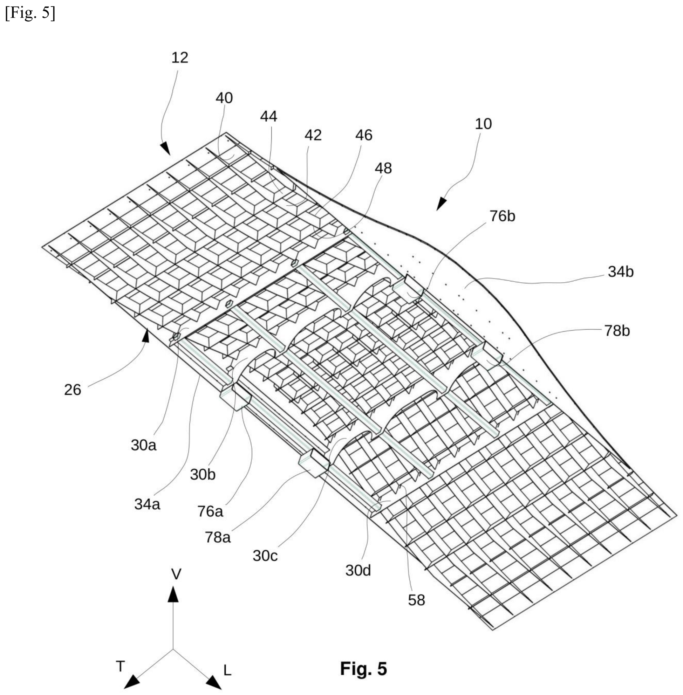

Le châssis 28 comprend quatre traverses 30a, 30b, 30c, 30d transversales, quatre longerons 32a, 32b, 32c, 32d longitudinaux, un premier flanc 34a latéral et un second flanc 34b latéral visibles aux figures 2 et 5.

En référence aux figures 2 et 3, l'âme alvéolaire 26 forme une grille qui est agencée au-dessous de la couverture 12 et qui présente une forme identique à la couverture 12, ici une forme ondulée en bosse.

L'âme alvéolaire 26 est agencée de façon à reprendre les efforts mécaniques appliqués sur la couverture 12.

A cet effet, l'âme alvéolaire 26 délimite une pluralité d'alvéoles 38 creuses de forme colonnaire qui sont délimitées chacune par quatre parois s'étendant globalement perpendiculairement depuis une face inférieure 40 de la couverture 12, comme on peut le voir à la figure 5.

L'âme alvéolaire 26 est formée par un premier ensemble de membrures longitudinales 42 et un second ensemble de membrures transversales 44.

Les membrures longitudinales 42 sont agencées perpendiculairement aux membrures transversales 44 pour former les alvéoles 38 de l'âme alvéolaire 26.

Chaque membrure 42, 44 forme une bande qui est découpée dans une tôle métallique plane, par découpage laser par exemple.

Comme on peut le voir à la figure 3, les membrures longitudinales 42 présentent chacune une forme ondulée qui suit la courbure de la couverture 12 du module 10, alors que les membrures transversales 44 présentent une forme rectiligne.

Avantageusement, les membrures longitudinales 42 sont réalisées en deux parties pour favoriser leur découpe et pour limiter les chutes de matière.

En référence à la figure 5, chaque membrure 42, 44 s'étend globalement perpendiculairement à la couverture 12, suivant sa hauteur, depuis un chant supérieur 46 en appui sur la face inférieure 40 de la couverture 12, jusqu'à un chant inférieur 48.

L'âme alvéolaire 26 est formée par emboîtement des membrures longitudinales 42 et des membrures transversales 44.

Dans ce but, les membrures longitudinales 42 délimitent chacune une pluralité de premières d'encoches 50 d'emboîtement, dont une est visible en vue éclatée sur le médaillon de la figure 3, qui s'étendent chacune depuis le chant inférieur 48 de la membrure longitudinale 42 associée, jusqu'à mi-hauteur de ladite membrure.

De même, les membrures transversales 44 délimitent chacune une pluralité de secondes d'encoches 52 d'emboîtement qui s'étendent chacune depuis le chant supérieur 46 de la membrure transversale 44 associée, jusqu'à mi-hauteur de ladite membrure.

On notera que les encoches 50, 52 s'étendent suivant la même direction que les membrure transversales 44 associées, c'est à dire perpendiculairement à la portion de la couverture 12 sur laquelle elles sont en contact.

Les encoches 50, 52 des membrures longitudinales 42 et des membrures transversales 44 sont conçues pour coopérer entre elles et pour permettre un chevauchement et un emboîtement des membrures longitudinales 42 sur les membrures transversales 44 pour former l'âme alvéolaire 26, à la façon d'un assemblage dit « à mi-bois » en charpente.

Comme on peut le voir à la figure 3, ce type d'assemblage par encoches complémentaires permet à l'âme alvéolaire 26 de présenter une épaisseur identique à la hauteur des membrures 42, 44 qui la composent.

Aussi, les membrures longitudinales 42 et les membrures transversales 44 de l'âme alvéolaire 26 sont reliées entre elles par soudage, les membrures 42, 44 étant également reliées sur la face inférieure 40 de la couverture 12 par soudage.

En référence aux figures 4 et 5, les quatre traverses 30a, 30b, 30c, 30d du châssis 28 comprennent successivement, d'amont en aval en référence au sens d'avancement du véhicule sur le module 10, une première traverse 30a, une deuxième traverse 30b, une troisième traverse 30c identique à la deuxième traverse 30b et une quatrième traverse 30d identique à la première traverse 30a.

Chaque traverse 30a, 30b, 30c, 30d transversale est composée d'une plaque de tôle métallique qui s'étend verticalement depuis un chant inférieur 54 en regard du sol, jusqu'à un chant supérieur 56 en regard de la couverture 12.

Chaque traverse 30a, 30b, 30c, 30d délimite dix paires d'encoches 58 qui s'étendent chacune depuis le chant supérieur 56 et qui sont prévues pour coopérer avec des encoches 60 complémentaires délimitées par les membrures longitudinales 42, de sorte que le chant supérieur 56 de chaque traverse 30a, 30b, 30c, 30d affleure le chant supérieur 46 de chaque membrure longitudinale 42 et du chant supérieur de chaque membrure transversale 44, comme on peut le voir à la figure 2.

Pour rappel, chaque membrure longitudinale 42 est réalisé en deux parties qui sont sensiblement décalées transversalement l'une par rapport à l'autre.

Pour s'adapter à ce décalage, chaque traverse 30a, 30b, 30c, 30d comporte vingt encoches 58 regroupées en dix paires, les deux encoches 58 d'une même paire étant également sensiblement décalées transversalement.

En référence à la figure 4, les quatre traverses 30a, 30b, 30c, 30d sont reliées par les quatre longerons 32a, 32b, 32c, 32d qui sont formés chacun par une barre tubulaire métallique.

A cet effet, chaque traverse 30a, 30b, 30c, 30d délimite quatre logements 62 qui sont alignés longitudinalement pour accueillir les longerons 32a, 32b, 32c, 32d.

Les longerons 32a, 32b, 32c, 32d sont soudés sur les traverses 30a, 30b, 30c, 30d.

De plus, le châssis 28 comporte un premier raidisseur supérieur 64a longitudinal qui relie une première extrémité libre de la deuxième traverse 30b et de la troisième traverse 30c.

Le châssis 28 comprend également un deuxième raidisseur inférieur 66a longitudinal qui relie une première extrémité libre des quatre traverse 30a, 30b, 30c, 30d.

De façon symétrique, le châssis 28 comporte un troisième raidisseur supérieur 64b longitudinal qui relie une seconde extrémité libre de la deuxième traverse 30b et de la troisième traverse 30c.

Le châssis 28 comprend également un quatrième raidisseur inférieur 66b longitudinal qui relie une seconde extrémité libre des quatre traverse 30a, 30b, 30c, 30d.

Chaque raidisseur 64a, 66a, 64b, 66b est formé par une tôle métallique et délimite deux encoches (non visibles) qui sont prévues pour coopérer avec des encoches complémentaires (non visibles) délimitées par les traverses 30a, 30b, 30c, 30d associées.

Les raidisseurs 64a, 66a, 64b, 66b sont soudés sur les traverses 30a, 30b, 30c, 30d associées. Comme on peut le voir sur les figures 2 et 5, le premier flanc 34a est fixé par soudage sur la première extrémité libre de chaque traverse 30a, 30b, 30c, 30d et symétriquement, le second flanc 34b est fixé par soudage sur une seconde extrémité libre opposée de chaque traverse 30a, 30b, 30c, 30d.

Ainsi, le premier flanc 34a et le second flanc 34b participent à la tenue mécanique du châssis 28. Enfin, le module 10 est équipé d'une première paire de fourreaux 76a, 78a et d'une seconde paire de fourreaux 76b, 78b, lesdites paires de fourreaux étant alignées transversalement pour permettre le passage d'une fourche d'un engin de levage dans le but de déplacer le module 10.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Module (10) pour la réalisation d'un circuit modulaire pour véhicule, le module (10) comportant au moins :
• une couverture (12) supérieure qui s'étend longitudinalement suivant la direction d'avancement prévue dudit véhicule et qui peut adopter une forme courbe, et
• une structure (14) de support inférieure qui supporte ladite couverture (12),
**caractérisé en ce que** la structure (14) de support comporte une âme alvéolaire (26) qui est agencée au-dessous de la couverture (12) et qui forme une grille délimitant une pluralité d'alvéoles (38) de forme colonnaire, les alvéoles s'étendant globalement perpendiculairement à la couverture (12) pour reprendre les efforts mécaniques appliqués sur la couverture (12).

2. Module (10) pour la réalisation d'un circuit modulaire pour véhicule selon la revendication 1, **caractérisé en ce que** l'âme alvéolaire (26) comporte au moins :
• un premier ensemble de membrures longitudinales (42) qui présentent chacune une pluralité de premières encoches (50), et
• un second ensemble de membrures transversales (44) qui présentent chacune une pluralité de secondes encoches (50) qui sont adaptées pour coopérer avec les encoches des membrures longitudinales (42) pour permettre un chevauchement et un emboîtement des membrures longitudinales (42) sur les membrures transversales (44) pour former l'âme alvéolaire (26), lesdites membrures (42, 44) s'étendant globalement perpendiculairement à la couverture (12), depuis un chant supérieur (46) qui est en appui sur une face inférieure (40) de la couverture (12).

3. Module (10) pour la réalisation d'un circuit modulaire pour véhicule selon la revendication 2, **caractérisé en ce que** chaque membrure (42, 44) forme une bande qui est découpée dans une tôle métallique.

4. Module (10) pour la réalisation d'un circuit modulaire pour véhicule selon l'une quelconque des revendications 2 à 3, **caractérisé en ce que** les membrures longitudinales (42) et les membrures transversales (44) de l'âme alvéolaire (26) sont reliées entre elles par soudage.

5. Module (10) pour la réalisation d'un circuit modulaire pour véhicule selon l'une quelconque des revendications précédentes, **caractérisé en ce que** la couverture (12) est réalisée au moyen d'une tôle métallique qui est pliée et qui est reliée par soudage sur l'âme alvéolaire (26).

6. Module (10) pour la réalisation d'un circuit modulaire pour véhicule selon l'une quelconque des revendications précédentes, **caractérisé en ce que** la couverture (12) est revêtue d'une peau supérieure (22) en élastomère qui est fixée sur la couverture (12) et qui est adaptée pour favoriser l'adhérence du véhicule.

7. Module (10) pour la réalisation d'un circuit modulaire pour véhicule selon l'une quelconque des revendications précédentes, **caractérisé en ce que** la structure (14) de support comporte au moins une traverse (30a, 30b, 30c, 30d) qui s'étend transversalement.

8. Module (10) pour la réalisation d'un circuit modulaire pour véhicule selon la revendication 7, **caractérisé en ce que** la structure (14) de support comporte au moins un longeron (32a, 32b, 32c, 32d) qui s'étend longitudinalement et qui relie lesdites traverses (30a, 30b, 30c, 30d) entre elles.

9. Module (10) pour la réalisation d'un circuit modulaire pour véhicule selon l'une quelconque des revendications précédentes, **caractérisé en ce qu'**il comporte au moins une paire de fourreaux transversaux (76a, 78a, 76b, 78b) qui sont solidaires de la structure (12) de support et qui sont agencés pour permettre le passage d'une fourche d'un engin de levage.
